# EUROPEAN PATENT SPECIFICATION

(11) **EP 2 118 395 B1**
(45) Date of publication and mention of the grant of the patent: **17.08.2016**
(21) Application number: 08730936.5
(22) Date of filing: 28.02.2008
(51) Int. Cl.: E04D 5/10, E04D 5/12, C08J 7/04, C08J 7/12

(54) **FLUORINATED POLYMER SYSTEM**
FLUORIERTES POLYMERSYSTEM
SYSTÈME POLYMÈRE FLUORÉ

(30) Priority: 01.03.2007 US 904272 P
(43) Date of publication of application: 18.11.2009
(73) Proprietor: Dow Global Technologies LLC, Midland, MI 48674 (US)
(72) Inventor: ULTSCH, Stefan, CH-ZH 8712 Stafa (CH)
(74) Representative: Boult Wade Tennant
(86) International application number: PCT/US2008/055260
(87) International publication number: WO 2008/109325

(56) References cited:
- WO-A-2008/019004
- DE-A1- 2 412 025
- DE-A1- 10 158 405
- GB-A- 1 075 994
- US-A- 3 581 779
- US-A- 5 968 287
- US-A- 6 030 694
- US-A1- 2002 009 580
- MOLLER BERND: ADHÄSION - KLEBEN & DICHTEN, vol. 44, no. 10, 2000, pages 30-33, XP008094189 DE
- CARSTENS P A B ET AL: "Improved and novel surface fluorinated products" JOURNAL OF FLUORINE CHEMISTRY, ELSEVIER, NL, vol. 104, no. 1, 1 June 2000 (2000-06-01), pages 97-107, XP004199238 ISSN: 0022-1139
- JORGENSEN G. & SCHISSEL P.: "EFFECTIVE ANTIREFLECTION COATINGS OF TRANSPARENT POLYMERIC MATERIALS BY GAS-PHASE SURFACE FLUORINATION" SOLAR ENERGY MATERIALS, vol. 12, no. 6, 1985, pages 491-500, XP008094143 USA
- G. KRANZ ET AL.: "The effect of fluorination on the surface characteristics and adhesive properties of polyethylene and polypropylene" INT. J. ADHESION AND ADHESIVES, vol. 14, no. 4, 1994, pages 243-253, XP008094181
- DATABASE WPI Week 200514 Thomson Scientific, London, GB; AN 2005-126039 XP002487881 & JP 2005 016204 A (MITSUBOSHI BELTING LTD) 20 January 2005 (2005-01-20)

## Description

### BACKGROUND AND SUMMARY OF THE INVENTION

The present invention relates to a fluorinated polymer system and its wide range of applications in building and construction industries. The present invention also relates to a process of making the fluorinated polymer system.

Conventional building or construction systems such as roofing systems can be divided into several categories: mechanically fixed roofs, ballasted roofs, and adhered roofs. Various building or construction materials such as roofing membranes or tapes are often used to construct these roofing systems. For example, scrim-reinforced roofing membranes may be used for mechanically fixed roofs. Fabric-reinforced roofing membranes may be suitable for ballasted roofs, and fleece-backed thermoplastic polyolefin (TPO) roofing membranes may be a solution for adhered roofs.

Conventional building or construction materials utilize different types of polymer materials in order to meet various roofing construction requirements. Examples of the polymer materials commonly used as building or contraction materials may include the followings:
- Bitumen including oxidized bitumen (PYE), atactic-polypropylene (aPP) or styrene-butadiene-styrene (SBS) modified bitumen (PYP), and ethylene copolymer bitumen (ECB);
- Thermoplastics including plasticized polyvinylchloride (p-PVC), thermoplastic polyolefin (TPO), ethylene-vinyl acetate (EVA)/PVC-blends, polyisobutylene (PIB), chlorosulfonated polyethylene (CSPE), and chlorinated polyethylene (CPE);
- Elastomers including ethylene - propylene diene monomer (EPDM), crosslinked chlorosulfonated polyethylene (CSPE), nitrogen butyl rubber (NBR), isobutene-isoprene rubber (IIR);
- Liquid polymers including polyurethane (PUR), epoxy or acrylic polymers (EA), unsaturated polyesters (UP).

However, there are many drawbacks for these conventional building or construction materials including high costs of the polymer materials and poor bonding properties with adhesives (e.g. epoxy adhesives, polyurethane adhesives, styrenic/acrylic adhesives, and bitumen) that are commonly used in the building and construction industries. For example, when conventional TPO material is used as waterproofing material for expansion engineering joints, bituminous parapets, facade sealants, and other building or construction applications, a fleece backing or a fleece edging is usually required in order to create sufficient adhesions between the TPO material and the adhesives. The fleece backing or fleece edging is usually expensive and complicated to install.

Also, since the conventional building or construction materials utilize different types of polymer materials to meet various roofing application requirements, it is costly and complicated for building or construction material producers to manufacture different types of roofing materials (e.g. manufacturing downtime for product change, varying line speeds, stocking and warehousing for each of the different roofing membranes). For roof installers, it is costly and complicated to deal with a number of roofing materials for various roofing requirements (e.g. stocking, purchase of small quantities and leftover/waste after roof installation). Also, it is complicated to deal with different roofing materials (e.g. membranes or tapes) made of different polymer materials, which may require extended contractor training and may potentially have varying quality and subsequent roof performance.

Accordingly, there is a need to develop a simple and improved polymer system which can offer one system that fits many different types of building or construction applications, and which requires less time to install and at a lower cost.

It is an object of the present invention to provide a fluorinated polymer system which overcomes many drawbacks of the conventional polymer materials used in the building and construction industries as discussed above. The fluorinated polymer system of the present invention can be efficiently installed in many various building or construction applications, particularly in roofing and waterproofing applications.

Some of the benefits of using the fluorinated polymer system of the present invention include:
1) making it possible for building or construction material producers to manufacture larger quantities with fewer raw materials, larger production lots with less changeover and downtimes, and less stocking and warehousing;
2) making it possible for building or construction contractors to be able to deal with only one type of building or construction materials (e.g. roofing or waterproofing membrane) at lower costs with a simplified product which reduces training needs, more consistent and higher installation quality and ultimately, higher performance finished building or construction products; and
3) providing building or construction materials (e.g. roofing or waterproofing materials) with good adhesion properties and without using the conventional complicated fleece reinforced, fleece edged, and fleece backed systems.

One aspect of the present invention is directed to a building or construction material comprising a building or construction material comprising a fluorinated polymer system that comprises a polymer having a fluorine modified surface layer, and an adhesive or a coating layer, wherein the adhesive or coating layer is applied to the fluorine modified surface layer, and wherein the polymer comprises a thermoplastic polyolefin (TPO), the TPO comprises at least one of a propylene/ethylene copolymer, a blend of propylene/ethylene copolymer and polypropylene and a blend of propylene/ethylene copolymer and polypropylene/ethylene propylene diene monomer and any combination thereof. Preferably, the fluorinated polymer system is heat weldable and waterproofing.

Another aspect of the present invention is directed to a building or construction structure comprising the building or construction material of the present invention stated above, and a material layer (A), wherein the material layer (A) is adhered to the fluorinated polymer system, and the material layer (A) is one of a thermal insulation layer, a plywood substrate, a metal, a coil, a concrete substrate, and a gypsum sheet.

Still another aspect of the present invention is directed to a process of making the building or construction material of the present invention stated above. The process may comprise a) continuously feeding a shaped polymer having a surface into a chamber, b) exposing the shaped polymer at room temperature to a blend of fluorine and inert gas under an atmospheric pressure, c) fluorinating the surface of the shaped polymer to form a fluorine modified surface layer, and d) applying an adhesive or a coating layer on the fluorine modified surface layer.

The article by MOLLER BERND (in ADHÄSION - KLEBEN & DICHTEN, vol. 44, no. 10, 2000, pages 30-33) discloses the effect of fluorination of polymers and elastomers on the surface energy level.

US2002/0009580 A1 discloses a roofing membrane comprising a waterproof synthetic resin film and a bitumen adhesive supported on the film. The synthetic resin film may be formed from a group of materials comprising inter alia fluoroplastics.

### BRIEF DESCRIPTION OF THE DRAWINGS

Figure 1 is a scheme of the fluorination process and its effect on the waterproofing tape or membrane.
Figure 2 is an overview of a single-ply roofing system using the fluorinated polymer system of the present invention with waterproofing, heat weldable, and adhesion features.
Figure 3 shows an engineering joint adhered with a fleece edge to a substrate, e.g. underground.
Figure 4 illustrates the process of testing the effect of fluorination on the fluorinated polymer sample.
Figure 5 illustrates the process of testing the heat weldability of the fluorinated polymer sample.

### DETAILED DESCRIPTION OF THE INVENTION

In the following detailed description, the specific embodiments of the present invention are described in connection with its preferred embodiments. However, to the extent that the following description is specific to a particular embodiment or a particular use of the present techniques, it is intended to be illustrative only and merely provides a concise description of the exemplary embodiments. Accordingly, the present invention is not limited to the specific embodiments described below, but rather; the invention includes all alternatives, modifications, and equivalents falling within the true scope of the appended claims.

Unless otherwise stated, a reference to a compound, a system, or a material includes the compound, system, or material by itself, as well as in combination with other compounds, systems, or materials, such as mixtures or combinations of compounds.

As used herein, the singular forms "a," "an," and "the" include the plural reference unless the context clearly dictates otherwise.

The present invention provides a fluorinated polymer system to improve the conventional non-fluorinated polymer systems used in the building and construction industries. The fluorinated polymer system overcomes many drawbacks of the conventional non-fluorinated polymer systems used for building or construction materials (e.g. roofing materials) as discussed above. There are also no significant negative effects caused by the fluorination to the overall performance or properties of the building or construction materials using the fluorinated polymer system.

The fluorinated polymer system of the present invention may comprise a polymer material, preferably, a shaped polymer material. The fluorinated polymer system may be flexible or rigid. The fluorinated polymer system may also be in various forms, for example, it may be in the form of a membrane, a tape, a strip, a sheet, a rod, a foam, a panel, or other shapes that are suitable for building or construction applications. The fluorinated polymer system of the present invention is, preferably, heat weldable and water proofing.

The fluorinated polymer system of the present invention is adhered to many types of adhesives or coatings that are suitable to be used in building and construction industries. Examples of the adhesives or coatings which are suitable for the present invention may include polyurethane adhesives or coatings, water based acrylic adhesives or coatings, styrenic/acrylic adhesives or coatings, epoxy (e.g. two-component epoxy) adhesives or coatings, bituminous adhesives, hot melt adhesives, and any combination thereof. The styrenic/acrylic adhesive or coating may comprise a mixture of styrene and acrylics or a styrene acrylic copolymer.

The present invention is to a building or construction material that comprises a fluorinated polymer system and an adhesive or a coating layer. The fluorinated polymer system is heat weldable and waterproofing.

The thickness of the fluorinated polymer system of the present invention may be in the range of from about 0.5 mm to about 4 mm, and preferably from about 1 mm to about 2 mm.

The fluorinated polymer system comprises a polymer having a fluorine modified surface layer. The adhesive or coating layer is applied to the fluorine modified surface layer. In the fluorine modified surface layer, at least part of the hydrogen atoms from the backbone of the polymer have been exchanged with fluorine atoms.

The fluorine modified surface layer may have a thickness of up to about 2 µm, more preferable, a thickness of about 0.01 µm to about 2 µm, and most preferably, a thickness of about 1 µm to about 1.5 µm. In addition, the fluorine modified surface layer may have a surface energy level of at least about 46 mN/m, preferably, from about 46 mN/m to about 70 mN/m, and more preferably, from about 46 mN/m to about 60 mN/m.

As stated above, the fluorinated polymer system of the present invention comprises a polymer, the polymer comprises a thermoplastic polyolefin (TPO). The TPO conmprises at least one of a propylene/ethylene copolymer, a blend of propylene/ethylene copolymer and polypropylene, a blend of propylene/ethylene copolymer and polypropylene ethylene propylene diene monomer,
and any combination thereof.

Depending upon the end use requirements, the polymer may further comprise additives including at least one of a stabilizer (e.g. processing or UV stabilizer), a flame retardant, a filler, a colorant, a functional additive, and any combination thereof.

Examples of the stabilizer suitable to be used in the present invention may include phenolic antioxidants, phosphidic antioxidants, thioether antioxidants, hydroxyl amine antioxidants, hindered amine stabilizers, and any combination thereof.

Examples of the flame retardant suitable to be used in the present invention may include magnesium hydroxide, aluminum tri-hydrate, and any combination thereof.

Examples of the filler suitable to be used in the present invention may include calcium carbonate, glass fibers, mica, and any combination thereof.

Examples of the colorant suitable to be used in the present invention may include titanium dioxide, carbon black, and any combination thereof. Examples of the functional additive suitable to be used in the present invention may include maleic anhydrate graft polymers.

The adhesive or coating layer suitable to be used in the present invention to apply to the fluorine modified surface layer may comprise at least one of polyurethane, water-based acrylic, styrenic/acrylic, epoxy, bituminous material, hot melt, and any mixture thereof. The styrenic/acrylic adhesive may comprise a mixture of styrene and acrylics or a styrene acrylic copolymer.

The building or construction material of the present invention may be one of a roofing material, an engineering joint, a tunnel liner, a water reservoir liner, a window sealant, a facade sealant, a perimeter liner, a wet room tape, a printable banner, a parapet interconnect, or any polymeric sheet, tape, or profile (e.g. various shaped polymer) that is suitable to be used as a building or construction material. The roofing material may be in the form of a membrane, a tape, a strip, or other forms which are suitable to be used in roofing structures.

According to another embodiment, a building or construction structure comprises the fluorinated polymer system of the present invention and a material layer (A), which is adhered to the fluorinated polymer system. The material layer (A) is one of a thermal insulation layer, a plywood substrate, a metal, a coil, a concrete substrate, or a gypsum sheet.

The fluorinated polymer system is preferred to be made by a continuous fluorination process. The continuous fluorination process of the present invention may comprise a) continuously feeding a shaped polymer having a surface into a chamber, b) exposing the shaped polymer at room temperature (i.e. about 25°C) to a blend of fluorine and inert gas under an atmospheric pressure (i.e. about 760 mmHg), c) fluorinating the surface of the shaped polymer to form a fluorine modified surface layer, and d) applying an adhesive or coating layer on the fluorine modified surface layer.

In general, the shaped polymer is fed continuously into the chamber at a speed of about 1 to about 100 m/min. The chamber for use in the continuous fluorination process is, preferably, a closed chamber or is a chamber hermetically sealed from outside atmosphere by a sealant. The process step of fluorinating of the surface of the shaped polymer may, preferably, last about 3 seconds to about 5 minutes. The shaped polymer material may comprise a TPO.

In general, the ratio of the blend of the fluorine and the inert gas is about 1 to about 20% of fluorine with about 99 to about 80% of inert gas, and preferably, about 10% fluorine with about 90% inert gas. The inert gas may comprise a nitrogen or combination of nitrogen and other inert gas.

During the process step of fluorinating the surface of the shaped polymer, the hydrogen atoms from the backbone of the shaped polymer are at least partially exchanged by the fluorine atoms from the blend of fluorine and inert gas. The fluorine atoms graft to the polymer backbone to form a covalent bond with the polymer. The fluorination process preferably takes place in a thin surface layer (also referred to as a "fluorine modified surface layer") of the shaped polymer.

The exposure time of the shaped polymer to the blend of fluorine and inert gas is considered the control parameter for the degree of fluorination needed. With the feeding speed of the shaped polymer to the chamber, it can be set in such a way that the surface energy of the fluorinated polymer product is at a level of at least about 46 mN/m. This surface energy level is preferred for making the fluorinated polymer with good wetting properties, and thus good bondability with various adhesives that are suitable to be used in building and construction industries. The polymer material underneath the fluorine modified surface layer stays unaffected, and therefore, maintains substantially the same overall properties and performance as that of the original polymer material before the fluorination.

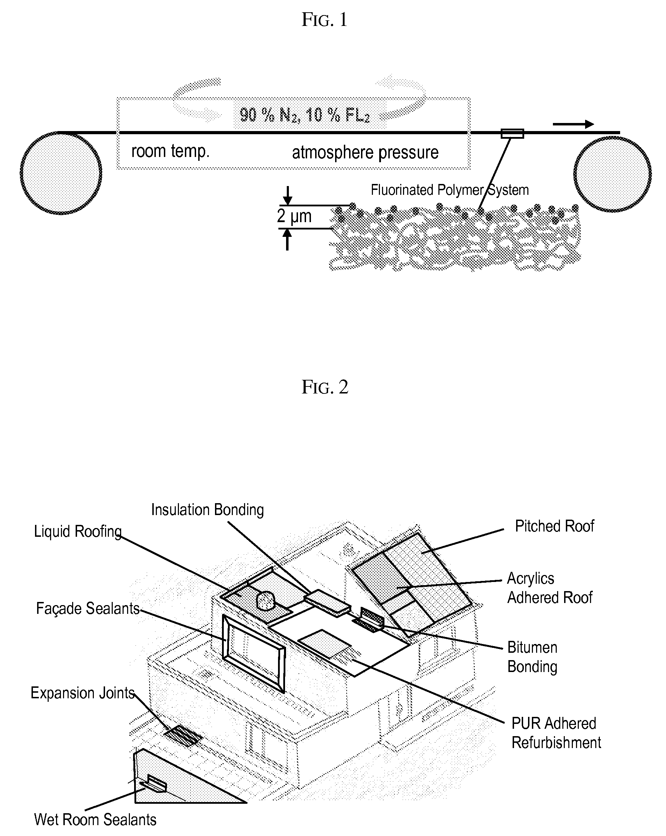

Figure 1 shows a scheme of the fluorination process and its effect on the polymer material used as a roofing membrane. The polymer material below the fluorine modified surface layer (about 2 um) stays substantially unchanged. Therefore, the overall properties and performance of the fluorinated polymer materials (e.g. the roofing membrane) also stay substantially unaffected.

The fluorinated polymer system of the present invention may be used in various applications in the building or construction industries.

In a preferred embodiment of the present invention, an engineering joint material may comprise the fluorinated polymer system of the present invention. The fluorinated polymer system preferably comprises a polymer having a fluorine modified surface layer. The fluorine modified surface layer may have a surface energy level of at least about 46 mN/m, preferably, from about 46 mN/m to about 70 mN/m, and more preferably, from about 46 mN/m to about 60 mN/m.

In another preferred embodiment of the present invention, a photovoltaic material or a thermosolar material may comprise the fluorinated polymer system of the present invention. The fluorinated polymer system preferably comprises a polymer having a fluorine modified surface layer. The fluorine modified surface layer may have a surface energy level of at least about 46 mN/m, preferably, from about 46 mN/m to about 70 mN/m, and more preferably, from about 46 mN/m to about 60 mN/m.

Other applications of the fluorinated polymer system may include applications such as roofing membranes or tapes to provide a fluorinated, waterproofing, and high adhesion surface. For example, the fluorinated polymer system can be used for mechanical fixed (naked), ballasted or adhered roofing with one product type, a scrim-reinforced, or a flame retardant membrane. The fluorinated polymer system is capable of meeting the requirements for many different types of building or construction including building and construction waterproofing tasks. With the use of the fluorinated system of the present invention in the roofing structures, the conventional fleece-backing structures for adhered roofing and waterproofing structures, e.g. in roof refurbishment or tunnel lining applications, can be eliminated. Figure 2 illustrates an overview of a single-ply roofing system with various places where the fluorinated polymer system of the present invention can be applied. The various applications of the fluorinated polymer system shown in Figures 2 include insulation bonding, liquid roofing, facade sealants, expansion joints, wet room sealants, PUR (polyurethane) adhered refurbishment, bitument bonding, acrylics adhered roof, and pitched roof.

The fluorinated polymer system of the present invention is particularly useful in roofing materials (e.g. roofing membranes or tapes). The surface energy of the conventional roofing membranes is usually at a level of about 30 mN/m. At this level of the surface energy, the surface properties of the roofing membranes such as wetting properties and adhesion properties are generally poor. The surface of these roofing membranes can only be adhered with very specific adhesion systems and with limited adhesion performance. With the use of the fluorinated polymer system of the present invention to produce building or construction materials such as roofing membranes or tapes, the surface energy of the building or construction materials can increase to a level of at least about 46 mN/m, preferably, from about 46 mN/m to about 70 mN/m, and more preferably, from about 46 mN/m to about 60 mN/m.

As a result, the wetting and adhesion properties of the surface of the building or construction materials have been greatly improved. This improvement in the surface energy level enables the fluorinated polymer system of the present invention to adhere with various adhesives and coatings which are suitable for building and construction industries and to provide excellent and long-term stable performance to the building or construction materials using the fluorinated polymer system.

The fluorinated polymer system of the present invention may also have the same or improved properties including heat welding and waterproofing properties and longevity performance of the conventional building or construction materials such as roofing membranes.

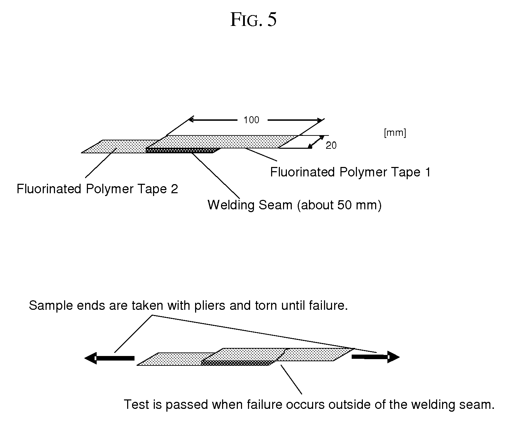

The heat welding property may be considered as one of the most important parameters for building or construction materials such as roofing membranes and waterproofing tapes. For example, roofing membranes and waterproofing tapes generally have to be homogenously joined in a reliable way to assure waterproofing over the lifetime of the building. This jointing may be obtained in an easy and economic way by welding, preferably, hot air welding. A welded joint is generally considered satisfactorily for waterproofing applications, if, in a tear testing, a break (failure) occurs outside of the welding seam in the roofing membrane or waterproofing tape (see Figure 5). For a hot air welding on roofing membranes or tapes, it is required that the roofing membranes or tapes have to exhibit reliable welding properties under various temperature and weather conditions, and with different types of hand-held or automated welding equipment.

It has been discovered in the present invention that the roofing membrane or tape using the fluorinated system of the present invention exhibits the same or improved welding property when compared to the non-fluorinated roofing membranes or tapes. For example, during a hot welding process (see Figure 5), the fluorinated surface (the fluorine modified surface layer) of the fluorinated polymer system can be reliably removed by using a brass brush or by a welding equipment with automated surface preparation means. The heat weldable and waterproofing properties of the polymer system after the fluorinated surface is removed remain unchanged or, in some cases as discussed below, have improved.

Without limiting the present invention to any one theory, it is believed that, in the fluorinated polymer system of the present invention, some low molecular fractions from additives (stabilizers, monomers, or the like) present in the polymer are edged away by the fluorination. Such low molecular fractions are known to possibly deteriorate the welding properties of the polymer significantly. As the low molecular fractions are neutralized by the fluorination, the heat welding consistency of the polymer surface is improved. Accordingly, the heat weldable properties of the fluorinated polymer system of the present invention make it a better alternative for surface modifications performed on building or construction materials (e.g. on roofing membranes or tapes). Unlike other surface modification technologies, such as plasma grafting treatment, which tend to reduce heat weldability of the polymer, often even making the polymer surface impossible to be heat welded.

Another positive aspect of the fluorinated polymer system of the present invention is that it provides the building or construction materials using the fluorinated polymer system with long-term stable performance. It has also been discovered in the present invention that the fluorinated surface of the fluorinated polymer system has excellent barrier properties. The barrier of the fluorinated surface prevents the low molecular fractions from migrating to the polymer surface, which protects the fluorinated polymer from degrading and provides a long term stable performance to the fluorinated polymer system.

A further positive aspect of the fluorinated polymer system of the present invention is that it can also be used in the building or construction and other applications without extensive approval and testing. In general, building or construction materials such as roofing membranes are usually made from complex polymer formulations of polymers, fillers, colorants, flame retardants, and stabilizers. These formulations have to pass complex testing, such as an extensive longevity testing. Because the fluorinated polymer system of the present invention affects only the surface of the roofing membrane and has no significant effect on the overall properties of the roofing membrane itself, no extensive approval and testing are required for the roofing membranes using the fluorinated polymer system of the present invention.

The fluorinated polymer system of the present invention may be useful in many different industrial fields including the building and construction industries. Some of the specific applications of the fluorinated polymer system are detailed as follows:

### A. THE FLUORINATED POLYMER SYSTEM WITH ADHESIVES

### A1. The Fluorinated Polymer System with Polyurethane (PUR) Adhesives

The conventional fleece-backed membranes for adhered roofing are expensive, and difficult to install at parapets or complicated roof structures. The fleece-backed membranes are usually delivered in shorter lengths compared with non-fleeced membranes, as they are bulkier in handling and heavier.

Fleece backed polyvinylchloride (p-PVC) membranes or thermoplastic polyolefin (TPO) membranes are usually used for roof refurbishment. The fleece backing function for the p-PVC membranes serves two purposes: (1) it provides adhesion function to adhesives (e.g. polyurethane (PUR) adhesives) and (2) it serves as a separation layer to avoid plasticizers migration from the p-PVC to adjacent structures. Due to plasticizer migration, a fluorinated PVC membrane without fleece backing generally cannot be used for the described roof refurbishment.

The fluorinated polymer system of the present invention, however, can be used as roofing membranes and adhered with PUR adhesives without having a fleece-backing in roof refurbishment. One of the preferred examples of the fluorinated polymer system of the present invention is a fluorinated TPO membrane. The fluorinated TPO membrane is based on flexible olefin copolymer, which is low cost, free of halogen and plasticizer, and compatible with the PUR adhesives. The fluorinated TPO membrane also has good welding characteristics. Because the fluorinated TPO membrane has no plasticizer, there is no need for a separate fleece-backing layer which the conventional p-PVC or non-fluorinated TPO membrane usually requires. In general, non-fleeced membranes are lighter weight and less bulky. Therefore, they are faster and easier to install with less waste. They can also be delivered in longer length with less joints required so that the installation and heat welding times can be reduced.

### A2. The Fluorinated Polymer System with Water-Based Adhesives

The fluorinated polymer system shows good adhesion with water-based adhesives, such as acrylic adhesives and styrenic/acrylic adhesives.

Adhering conventional roofing with water-based adhesives on the construction site can only be achieved with PVC membranes or fleece-backed membranes. The PVC membrane is generally perceived as not "environmentally friendly" and difficult to recycle. The fleece backed membranes are expensive and complicated to apply.

The fluorinated polymer system can be used as an environmentally friendly alternative to the PVC membranes or the fleece-backed membranes. The fluorinated polymer used in the fluorinated polymer system can be stripped from the adhesive layers for recycling.

In addition, the fluorinated polymer system can provide a simple solution to the building or construction materials such as roofing, façade, window frame, and wet room applications. The fluorinated polymer system can be adhered directly or with water-based adhesives or styrene/acrylics adhesives to the building or construction material such as roofing, facade, window frame, and wet room. The good adhesion feature of the fluorinated polymer system is provided by the increased surface energy of the polymer surface due to the fluorination, and as a result, the wetability and surface polarity of the polymer surface are also increased.

### A3. The Fluorinated Polymer System with Hot Bitumen

Bitumen is one of the most traditional materials for building and construction industries. Pure bitumen is barely used. The most common type of bitumen is a polymer modified bitumen such as oxidized bitumen (PYE), atactic-polypropylene (aPP) or styrene-butadiene-styrene (SBS) modified bitumen and ethylene copolymer bitumen (ECB). In general, bitumen is in black color and may be installed on roofing construction by complicated and unsafe open-torch processing. Bitumen is generally in the form of a heavy and inflexible sheet which cannot be bonded satisfactorily with commonly used building and construction adhesives. The bonding of the bitumen to the building or construction structure is typically achieved by attaching butyl bonding stripes/tapes or by hot torch adhesion. Two or three layers of bitumen may be required to apply in roofing construction using bitumen, leading to high cost of materials and labor.

In addition, when a hot bitumen is required in building or construction applications, for example, in bitumen roofing and bituminous joint sealant applications, parapets/interconnects are obtained by using the hot bitumen. For this application, roofing membranes or joint sealant tapes have to withstand high temperatures of the hot bitumen and have good adhesion to the hot bitumen. Conventional TPO membranes with fleece edges or crosslinked EPDM (Ethylene Propylene Diene Monomer) tapes with fleece edges are applicable for the bitumen roofing and bituminous joint sealant applications. However, the fleece edged membranes or tapes are expensive and complicated to apply.

It has been discovered in the present invention that the fluorinated polymer system is compatible with the hot bitumen including oxidized bitumen and SBS- or aPP-modified bitumen. The fluorinated polymer system such as fluorinated TPO membrane or fluorinated sealant tape can be used together with bitumen roofing and bituminous joint sealant to provide simple solutions for parapets/interconnects applications using hot bitumen.

### B. THE USE OF THE FLUORINATED POLYMER SYSTEM WITH LIQUID ROOFING SYSTEM

Roofs having a large surface area are preferably sealed using single-ply membranes. These membranes can cover large areas quickly and are less labor-intensive for fixing and heat welding. If the roof has an irregular structure or a lot of interruptions, the effort required for the installation of single-ply membranes increases significantly. The roofing contractor often uses liquid roofing adhesives such as polyurethane, acrylics, and epoxy for single-ply membrane installation, as these adhesives are more cost effective. However, the combination of single ply roofing membranes with liquid roofing adhesives requires special efforts such as pre-cleaning or additional primers.

The fluorinated polymer system of the present invention (e.g. fluorinated roofing membranes), however, can be easily applied together with liquid roofing adhesives due to the excellent wetting properties of the fluorinated polymer system, which has a surface energy level of at least about 46 mN/m, preferably, from about 46 mN/m to about 70 mN/m, and more preferably, from about 46 mN/m to about 60 mN/m.

A mechanically stable and waterproofing bond is formed between the fluorinated polymer system and the liquid roofing adhesives. The resultant liquid waterproofing fluorinated polymer system can be coated on the installed single-ply membrane by brushing, spray-on or other coating technologies suitable for applying liquid waterproofing systems. Therefore, the combination of single-ply membrane with liquid waterproofing fluorinated polymer system offers a simple and cost effective waterproofing solution for both simple and complicated roof structures.

### C. THE USE OF THE FLUORINATED POLYMER SYSTEM WITH THERMAL INSULATION SYSTEMS

Conventional roofing systems (e.g. non-fluorinated roofing membranes) cannot be adhered with insulation materials (e.g. insulation boards) on the construction site because the bonding of the conventional roofing membranes to the thermal insulation boards made from polymers, such as polystyrene, polyurethane, is difficult and complicated..

The fluorinated polymer system (e.g. fluorinated roofing membranes) of the present invention is found to have higher bonding strength to the thermal insulation boards due to the excellent wetting properties of the fluorinated polymer system, which has a surface energy level of at least about 46 mN/m, preferably, from about 46 mN/m to about 70 mN/m, and more preferably, from about 46 mN/m to about 60 mN/m.

As a result, it is possible to adhere the fluorinated roofing membrane directly or through an adhesive to the thermal insulation board on the construction site.

### D. THE USE OF THE FLUORINATED POLYMER SYSTEM FOR ENGINEERING JOINTS

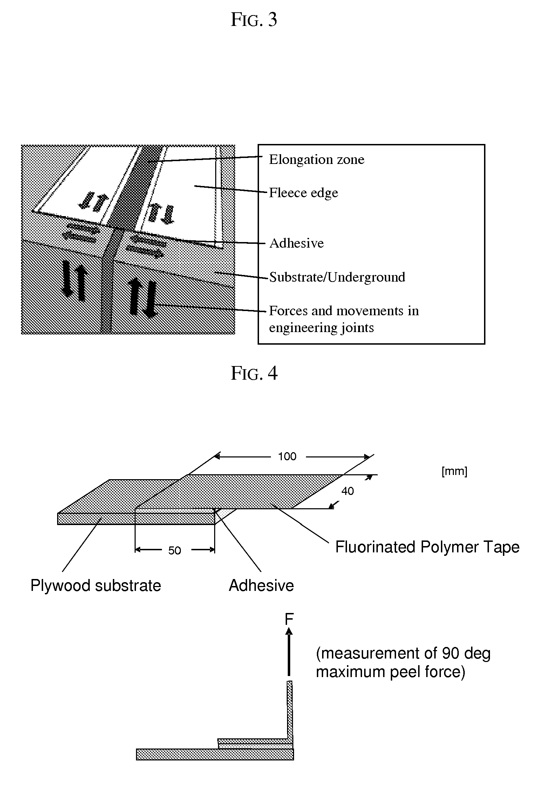

The engineering joints are gaps between building or construction structures. These gaps undergo considerable dimensional changes with temperature, soil settings, mechanical and wind-loads. The engineering joint may be sealed using a polymer adhesive tape with an elongation zone in the middle of the engineering joint as shown in Figure 3. The elongation zone has to absorb the dimensional changes, may be up to or in excess of 200% change relative to the elongation zone. The forces within the engineering joint may reach a very high level, for example, up to the mechanical strength of the adhered polymer tape and the adjacent structures (e.g. the surface that the adhesive tape is adhered to, e.g. underground/substrate). Conventional two-component epoxy adhesives in combination with the polymer tapes are used to generate sufficient adhesion between the adjacent structure (e.g. underground substrate) and engineering joint. However, the polymer tapes are costly and difficult to apply.

Figure 3 shows an engineering joint which is adhered with a fleece edge to the underground substrate. In the engineering joint as shown in Figure 3, adhesion is considered sufficient when no failure occurs within the polymer tape and adhesive.

Adhesive tapes are either made from special polymers such as chlorosulfonated polyethylene (CSPE) or polyolefins with additives incorporating epoxy-functionalities. These polymer materials used for making the adhesive tape usually have poor bonding/adhesion properties with polyurethane adhesives, styrenic/acrylic adhesives, and water-based acrylic adhesives. These polymer materials are also expensive, need pre-cleaning before applying the adhesives, and often show a high rate of failure.

For example, the CSPE is a very costly polymer which is difficult to produce in an environmentally unfriendly process. Further, the CSPE may crosslink over time, which makes it difficult to weld and which leads to inconsistent performance.

Other polymers, such as TPO, PVC or EPDM, when used in general waterproofing for expansion joints (e.g. engineering joint), bituminous parapets, façade sealants, and other building or construction applications, usually require fleece edges to provide adhesion, which adds costs and complicates processing for the applications.

The fluorinated polymer system of the present invention, on the other hand, can be adhered with epoxy adhesives or any other adhesives that have sufficient strength to withstand the stresses occurring in the engineering joints. Such stresses can be, for example, above the mechanical strength of the underground/substrate (e.g. concrete substrate). The fluorinated polymer system provides similar or improved adhesive strength as that is provided by the CSPE or other polymers with epoxy functionalities or fleece edged systems. The fluorinated polymer system of the present invention can also be heat-welded to roofing/waterproofing membranes. The system enables new, simple, and reliable solutions that combine roofing waterproofing with the engineering joints.

The fluorinated polymer system of the present invention shows excellent adhesion with adhesives such as epoxy without pre-cleaning or surface activation as required for the CSPE chlorosulfonated polyethylene sealant tapes. The high surface energy level generated by the fluorination gives the fluorinated polymer system a high bonding surface with the adhesives. The fluorinated polymers can be made from inexpensive polyethylene/polypropylene copolymers or other similar inexpensive polyolefin materials. The fluorinated polymer systems do not need the fleece edges to provide sufficient adhesion and thus can be cut to any dimension and are easier to install, when compared with fleece edged tapes.

### E. THE USE OF THE FLUORINATED POLYMER SYSTEM WITH PHOTOVOLTAIC SYSTEMS

Photovoltaic or thermosolar systems with adherable or polar surfaces may be directly adhered to the fluorinated polymer system (e.g. membranes) of the present invention on site. The adherable surfaces may be surfaces with adhesive layers. The polar surfaces may be polymeric surfaces. Example of the photovoltaic or thermosolar systems may be photovoltaic or thermosolar materials such as photovoltaic membranes or thermosolar heat exchange panels. Example of the fluorinated polymer system of the present invention may be fluorinated TPO membranes suitable for roofing and waterproofing applications.

According to a preferred embodiment of the present invention, a photovoltaic membrane or thermosolar heat exchange panel comprising the adhesive layer on the surface of the photovoltaic membrane or thermosolar heat exchange panel can be directly adhered to the fluorinated polymer system of the present invention. (e.g. the fluorinated TPO membranes for roofing and waterproofing applications). Likewise, a photovoltaic membrane or thermosolar heat exchange panel comprises a polymer with a polymeric surface can be fluorinated to form a fluorine modified surface layer and to gain a surface energy of at least about 46 mN/m, preferably, from about 46 mN/m to about 70 mN/m, and more preferably, from about 46 mN/m to about 60 mN/m.

The photovoltaic membranes and thermosolar panels may be adhered directly or through an adhesive layer to building or construction materials such as roofing and waterproofing materials.

The adhesive layer for the photovoltaic or thermosolar systems may be any adhesive that is suitable for building or construction materials. Examples of such additives may include polyurethane adhesives, two-component epoxy adhesives, hot melt adhesives, water based acrylic adhesives, or any combination thereof.

The fluorinated polymer system of the present invention may also be used to produce socketing or fastening systems. The fluorinated socketing or fastening systems can be adhered or heat welded to the building or construction materials including roofing and waterproofing materials. Such socketing or fastening systems can be used, for example, for simple and inexpensive installations on the photovoltaic panels, thermosolar systems, lightning protection, or other roof like materials.

### F. THE USE OF THE FLUORINATED POLYMER SYSTEM WITH OTHER APPLICATIONS

### F1. Metal Surfaces and Coil Coating

Conventional TPO coated metal sheets are generally used in roofing construction for parapet structures. The TPO coated metal sheets offer a nice appearance and the possibility to directly heat weld roofing membranes. However, the coated metal sheet is produced in a process which involves pre-cleaning a metal coil with solvent, applying a hot melt on a preheated coil, and then applying a roofing membrane on the hot melt. It is an energy consuming process and has to be run diligently to avoid blistering and weak spots.

Metal structures used in building and construction applications often require waterproofing. The fluorinated polymer system of the present invention with the waterproofing feature can be adhered to the metal sheet with adhesives such as polyurethane and epoxy adhesives to provide a simple waterproofing metal sheet suitable to be used in building or construction applications. The fluorinated polymer system can be adhered with adhesives to the metal sheets at room temperature (i.e. 25°C) and make it possible to produce a coated metal sheet with less energy consumption and in better quality, compared to the conventional TPO coated metal sheets.

### F2. Printing and Painting Systems

Conventional TPO membranes cannot be printed or coated with standard printing technologies. This makes labeling, printing, and coloring difficult, unreliable or even impossible.

The fluorinated polymer system (e.g. fluorinated TPO membranes) of the present invention, on the other hand, can be printed, colored, labeled with the standard printing technologies using inks and colorants. Further, the fluorinated polymer system with improved wetting properties can significantly improve the printing properties of the building or construction materials such as roofing membrane and provide a long-term and abrasion stable coloring and labeling on the roofing membrane.

### F3. Improved Thermal Resistance and Reduced Stickiness

It has been discovered in the present invention that the fluorinated polymer system (e.g. fluorinated polymer membranes) shows improvement of thermal resistance and reduced stickiness when compared to unmodified polymer systems.

During the production of unmodified polymer membranes, the finished products are wound at elevated temperatures (e.g. generated by residual heat from the production step) and under considerable tension on wind-up reels. It is a common problem that sticky and low melting polymers tend to adhere on the wind-up rolls, making unreeling of the finished polymer product difficult or impossible.

The fluorinated polymer membranes, however, are thermally more stable and have less stickiness due to fluorination modification of the surface of the polymer membranes, in comparison with unmodified polymer membranes. The fluorination modification on the surface of the fluorinated polymer membranes overcomes the stickiness problems on wind-up reels during production of the fluorinated polymer membranes.

### F4. Vapor Transmitting Membranes

Vapor transmitting membranes are often required for facade sealant and pitch roof applications. The conventional pitch roof membranes and facade sealants can only be adhered with specific adhesives. For example, when the conventional pitched roofing membranes are joined with roofing membranes, for example, TPO flat roof membranes, the conventional pitched roofing membranes can only be adhered with a limited choice of adhesives.

The fluorinated polymer system of the present invention can be modified to be vapor transmitting by perforation or by polymer additives. In this way, building or construction materials such as roofing membranes, facade sealants, and pitch roof membranes can be made from one simple fluorinated polymer system with vapor transmitting functions. These modified building or construction materials can be adhered to roofing membranes, parapets, or other building or construction structures by heat welding or by using adhesives.

### F5. Improved UV and Weathering Resistance

UV and weathering resistance is one of the important parameters in polymeric roofing systems. It is important for the service life of the polymeric roofing systems since the polymeric roofing systems are often exposed to UV and a broad spectrum of different weather conditions. In conventional practices, roofing membrane producers develop more sophisticated stabilizer systems to extend UV-resistance of the roofing membranes. However, UV-stability improvement by stabilizers appears to have reached its limits. The demands placed on the products continue to increase.

It has been discovered in the present invention that the fluorinated polymer systems have improved UV and weathering resistance. The fluorine modified surface layer of the fluorinated polymer system may act as a UV- and oxygen barrier and retards degradation of the polymer underneath the fluorine modified surface layer. Further, the fluorine inhibits the migration of UV- or other polymer stabilizers or loss of UV- or other polymer stabilizers. The polymer stabilizers generally comprise small molecules, which may migrate over time from within the polymer to the surface of the polymer, or may be extracted by water, humidity, fluid, or atmosphere from the environment. The fluorinated surface layer, with its excellent barrier properties, prevents these small molecules from migrating or getting extracted.

### F6. Other Applications in Addition to the Building or Construction Materials

The fluorinated polymer system of the present invention may also be useful for other applications in addition to the building or construction materials. For example, the fluorinated polymer systems may find applications in marine applications, printed banners, wire and cable, automotive, footwear, clothing, food and beverage, or the like.

The following examples and comparative examples further illustrate the present invention in detail but are not to be construed to limit the scope thereof.

### Examples

### Samples Preparation:

Three types of extruded membranes sheets (1 mm in thickness, 300 mm in width, and 20 m in length each) were prepared from the following polymer blends:
- 100 % Propylene/Ethylene Copolymer (Versify™ 2300, supplied by The Dow Chemical Company) (hereinafter referred as "Sample 1")
- 80 % Propylene/Ethylene Copolymer (Versify™ 2300, supplied by The Dow Chemical Company) and 20% Polypropylene (Inspire™ 137, supplied by The Dow Chemical Company) (hereinafter referred as "Sample 2")
- 60 % Propylene/Ethylene Copolymer (Versify™ 2300, supplied by The Dow Chemical Company) and 40% Polypropylene (Inspire™ 137, supplied by The Dow Chemical Company) (hereinafter referred as "Sample 3")

The fluorinated samples were produced in a closed chamber with 10 % fluorine and 90 % nitrogen at room temperature (i.e. about 25 °C). Fluorination was set at three levels by variation of exposure time; all were less than one minute, such that sufficient levels of surface energy of at least about 46 mN/m were generated. The surface energy levels of the samples in the range of about 46 mN/m to about 60 mN/m are shown in Table 1.

In the following tables, the term "Virgin" refers to the comparative sample with no fluorination treatment. F1, F2 and F3 each stands for increasing levels of fluorination as a function of exposure time to the fluorine/nitrogen mixture. F1 sample was exposed to fluorination for about 10 seconds. F2 sample was exposed to fluorination for about 20 seconds. F3 sample was exposed to fluorination for about 30 seconds.

**Table 1: Surface Energy Levels of the Fluorinated Samples**

| Surface Energy [mN/m] | | | | |
|---|---|---|---|---|
| Samples | Virgin | Fluorination F1 | Fluorination F2 | Fluorination F3 |
| Sample 1 | < 30 | 46 | 48 | 56 |
| Sample 2 | < 30 | 50 | 52 | 56 |
| Sample 3 | < 30 | 52 | 52 | 58 |

Several tests were performed to evaluate the effect of the fluorination as set forth in the following examples. Figure 4 shows the process of testing the samples.

### Example 1

### Adhesion Testing:

The virgin and the fluorinated samples (Samples 1-3) of 200 x 300 mm each was cut out from the membrane sheets prepared earlier. These samples were adhered to plywood substrates with one-component water-based acrylic adhesives suitable to be used in building and construction applications.

The water based acrylic dispersion adhesive, Intercoll™ D-3218 from WAKOL (www.wakol.com), was used. This acrylic adhesive is low viscous and suitable to be used in fully adhered PVC roofing on soaking undergrounds.

The water based acrylic dispersion adhesive was first agitated to eliminate any phase separation due to storage. The water based acrylic dispersion adhesive was then applied on a plywood substrate with a brush to form a thin but coherent adhesive layer. The virgin and the fluorinated samples were then pressed into the adhesive layer using a pressing roll. Excessive adhesive was wiped away with kitchen paper.

The finished virgin and the fluorinated samples were kept under pressure for 24 hours. After three days, the peel strength testing of the finished virgin and fluorinated samples was performed in a tensile tester. The results are shown in Table 2.

Peel strength is generally used to measure the adhesive bond strength of the adhesive. Peel strength is measured in Newtons per 40 mm sample width (N/40 mm). Figure 4 shows the process of testing the peel strength of a fluorinated polymer tape.

**Table 2. Peel Strength of Water-based Acrylic Dispersion Adhesives**

| PEEL STRENGTH [N/40 mm] | | | | |
|---|---|---|---|---|
| Sample 1 | **Virgin** | **F1** | **F2** | **F3** |
| | 1.2 | 32 | 38.8 | 36.8 |
| | 1.2 | 26 | 22.5 | 24.3 |
| | 1.2 | 34 | 36.2 | 31.6 |
| Average | 1.2 | 30.6 | 32.5 | 30.9 |
| Sample 2 | 3.2 | 36.1 | 22.9 | 54.6 |
| | 3.5 | 63.7 | 37.3 | 76 |
| | 3.2 | 58.5 | 39.7 | 86.2 |
| Average | 3.3 | 52.8 | 33.3 | 72.2 |
| Sample 3 | 2.8 | 22.5 | 22.5 | 50.8 |
| | 1.8 | 29.8 | 21 | 73.3 |
| | 1.1 | 29.5 | 30.6 | 78.1 |
| Average | 1.9 | 27.2 | 24.7 | 67.4 |

The results from Table 2 clearly demonstrate that the fluorinated samples have higher adhesion capability compared to the virgin (non-fluorinated) samples.

### Example 2

### Adhesion Testing:

The virgin and the fluorinated samples (Samples 1-3) of 200 x 300 mm each were cut out from the membrane sheets prepared earlier. These samples were adhered to plywood substrates with the one-component polyurethane (PUR) adhesives which is suitable for use in building and construction applications.

The one-component PUR adhesives, Dynol™ 1622 from PARAMELT are used. This PUR adhesive is high viscous liquid adhesive and is suitable to be used in roof refurbishment.

The one-component PUR adhesive was applied on the plywood substrate with a brush to form a layer of coating with a thickness of about 0.5 mm. The virgin and the fluorinated samples were then pressed into the PUR adhesive layer using a pressing roll. Excessive PUR adhesive was wiped away with kitchen paper.

The finished virgin and fluorinated samples were kept under pressure for 24 hours. After three days, the peel strength testing of the finished virgin and fluorinated samples was performed in a tensile tester. The results are shown in Table 3.

**Table 3. Peel Strength of Polyurethane Adhesives**

| PEEL STRENGTH [N/40 mm] | | | | |
|---|---|---|---|---|
| | Virgin | F1 | F2 | F3 |
| Sample 1 | 5.3 | 52.2 | 49.6 | 76.6 |
| | 14.5 | 44.6 | 42 | 61.3 |
| | 6 | 133.3 | 109.8 | 123.1 |
| Average | 8.6 | 76.7 | 67.1 | 87 |
| Sample 2 | 11.5 | 58.2 | 75.9 | 120.7 |
| | 18.11 | 48.3 | 73.2 | 122.8 |
| | 19 | 54.6 | 59.4 | 140.7 |
| Average | 16.2 | 53.7 | 69.5 | 128.1 |
| Sample 3 | 6.4 | 54.2 | 121.8 | 144.4 |
| | 7.4 | 52.8 | 121.7 | 91.6 |
| | 6.7 | 76 | 126.4 | 113.7 |
| Average | 6.8 | 61 | 123.3 | 116.6 |

The results from Table 3 clearly demonstrate that the fluorinated samples have higher adhesion capability compared to the virgin (non-fluorinated) samples.

### Example 3

### Adhesion Testing:

The virgin and the fluorinated samples (Samples 1-3) of 200 x 300 mm each was cut out from the membrane sheets prepared earlier. These samples were adhered to plywood substrates with epoxy adhesives which are suitable to be used in building and construction applications.

The two-component-epoxy adhesive, Concresive™ 2200 from BASF, was used. This epoxy adhesive is suitable for use with MASTERFLEX™ 3000 sealants for engineering joints.

The epoxy adhesive components were intensively mixed with a spatula. Within 10 minutes, which was well below the allowable potting time of 2 hours, the virgin and fluorinated samples were pressed into the adhesive using a pressing roll. Excessive adhesive was removed from the edges with a spatula.

The finished virgin and the fluorinated samples were kept under pressure for 24 hours. After three days, the peel strength testing of the finished virgin and the fluorinated samples was performed in a tensile tester. The results are shown in Table 4.

**Table 4. Peel Strength of two component Epoxy Adhesives**

| PEEL STRENGTH [N/40 mm] | | |
|---|---|---|
| Sample | Virgin | Fluorinated Sample |
| Sample 1 | 1.1 | 163 |
| | 2.5 | 150.6 |
| | 1.1 | 175.7 |
| Average | 1.6 | 163.1 |
| Sample 2 | 8.3 | 201.4 |
| | 6.7 | 180.4 |
| | 4.4 | 228.6 |
| Average | 6.4 | 203.5 |
| Sample 3 | 0 | 169.4 |
| | 2.3 | 278.3 |
| | 2.1 | 203.5 |
| Average | 2.2 | 217.1 |

The results from above Table 4 clearly demonstrate that the fluorinated samples have higher adhesion capability compared to the virgin (non-fluorinated) samples.

### Example 4

### Adhesion Testing:

The virgin and the fluorinated samples (Samples 1-3) of 200 x 300 mm each were cut out from the membrane sheets prepared earlier. These samples were adhered to plywood substrates with the styrenic/acrylic adhesives suitable to be used in building and construction applications.

The styrenic/acrylic adhesive dispersions, Intercoll™ D 3151 from WAKOL were used. The styrenic/acrylic dispersion is suitable to be used for facade sealants, window sealants, and the like.

The styrenic/acrylic adhesive was applied to the plywood substrate with a spatula to form an adhesive layer with a thickness of about 1 mm. Within 5 minutes, the virgin and the fluorinated samples were pressed into the adhesive layer using a pressing roll. Excessive adhesive was removed from the edges with a spatula.

The plywood substrates with the virgin and the fluorinated samples were kept under pressure for 24 hours. After three days, the peel strength testing of the virgin and the fluorinated samples was performed in a tensile tester. The results are shown in Table 5.

**Table 5. Peel Strength of Acrylic Dispersion Adhesive**

| PEEL STRENGTH [N/40 mm] | | |
|---|---|---|
| Samples | Virgin | Fluorinated Sample |
| Sample 1 | No stick | 20 |
| | No stick | 42.5 |
| | No stick | 25.4 |
| Average | No stick | 29.3 |
| Sample 2 | No stick | 69 |
| | No stick | 46 |
| | No stick | 48 |
| Average | No stick | 55 |
| Sample 3 | No stick | 77 |
| | No stick | 60 |
| | No stick | 48 |
| Average | No stick | 58 |

The results from Table 5 clearly demonstrate that the fluorinated samples have higher adhesion capability compared to the virgin (non-fluorinated) samples.

### Example 5 - Heat Welding Test

The heat welding properties of the virgin and fluorinated samples were tested using a hot air welding system, which is suitable to be used in the building and construction industry, as shown in Figure 5.

The fluorinated layers were removed from the surface of the fluorinated samples with a brass brush. These samples along with the virgin samples were heat welded by hand at a set of temperatures of 360°C, 380°C, and 400°C, according to general roofing and waterproofing state of the art. The welded samples were then left to cool to room temperature (i.e. about 25 °C). Subsequently, five test pieces of 20 mm tapes were cut from the welded seams (see Figure 5) for each of the Samples 1-3. The welding performance on each test piece was tested in a tensile tester where the heat welded test pieces are taken with two pliers and torn apart until failure occurs on each test pieces (see Figure 5). The same pass the test if the failure occurs outside of the welding seem. The results of both fluorinated samples and virgin samples are shown in Table 6.

**Table 6. Heat Welding Property of the Fluorinated Samples**

| | | Welding Temperature [°C] | | | | | |
|---|---|---|---|---|---|---|---|
| | | 360 | 380 | 400 | 360 | 380 | 400 |
| | | Virgin | | | Fluorinated samples | | |
| Sample 1 | Tests 1-5 | pass | pass | Pass | pass | pass | Pass |
| Sample 2 | Tests 1-5 | pass | pass | Pass | pass | pass | Pass |
| Sample 3 | Tests 1-5 | pass | pass | Pass | pass | pass | Pass |

The results in Table 6 show that the fluorinated samples have the same heat welding properties as the non-fluorinated virgin sample, which indicates that the fluorination did not have a negative effect on the heat welding properties of the polymer. This is unlike other alternative surface modification technologies such as plasma treatment which tends to reduce heat weldability, often even making the membrane surface impossible to heat welded.

## Claims

1. A building or construction material comprising
a fluorinated polymer system that comprises a polymer having a fluorine modified surface layer, and
an adhesive or a coating layer,
wherein the adhesive or coating layer is applied to the fluorine modified surface layer, and wherein the polymer comprises a thermoplastic polyolefin (TPO), the TPO comprises at least one of a propylene/ethylene copolymer, a blend of propylene/ethylene copolymer and polypropylene and a blend of propylene/ethylene copolymer and polypropylene/ethylene propylene diene monomer and any combination thereof.

2. The material according to claim 1, wherein the fluorinated polymer system is heat weldable and waterproofing.

3. The material according to claim 1, wherein the fluorine modified surface layer comprises the polymer having at least part of the hydrogen atoms from the backbone of the polymer being exchanged with fluorine atoms.

4. The material according to claim 1, wherein the fluorine modified surface layer has a thickness of up to about 2 µm.

5. The material according to claim 1, wherein the fluorine modified surface layer has a surface energy level of at least about 46 mN/m.

6. The material according to claim 1, wherein the polymer further comprises at least one of a stabilizer, a flame retardant, a colorant, a filler, a functional additive, and any combination thereof.

7. The material according to claim 1, wherein the adhesive or coating layer comprises at least one of polyurethane, water-based acrylic, styrenic/acrylic, epoxy, bituminous material, hot melt, and any mixture thereof.

8. The material according to claim 1, wherein the building or construction material is one of a roofing material, an engineering joint, a tunnel liner, a water reservoir liner, a window sealant, a facade sealant, a perimeter liner, a wet room tape, a printable banner, or a parapet interconnect.

9. A building or construction structure comprising the building or construction material of claim 1 and a material layer (A), wherein the material layer (A) is adhered to the fluorinated polymer system, and wherein the material layer (A) is one of a thermal insulation layer, a plywood substrate, a metal, a coil, a concrete substrate, and a gypsum sheet.

10. A process of making the building or construction of claim 1, comprising the steps
a) continuously feeding a shaped polymer having a surface into a chamber,
b) exposing the shaped polymer at room temperature to a blend of fluorine and inert gas under an atmospheric pressure,
c) fluorinating the surface of the shaped polymer to form a fluorine modified surface layer, and
d) applying an adhesive or a coating layer on the fluorine modified surface layer.

## Patentansprüche

1. Ein Bau- oder Konstruktionsmaterial, das Folgendes beinhaltet:
ein fluoriertes Polymersystem, das ein Polymer mit einer mit Fluor modifizierten Oberflächenschicht beinhaltet, und
ein Haftmittel oder eine Überzugsschicht,
wobei das Haftmittel oder die Überzugsschicht auf die mit Fluor modifizierte Oberflächenschicht aufgebracht wird, und wobei das Polymer ein thermoplastisches Polyolefin (TPO) beinhaltet, wobei das TPO mindestens eines von einem Propylen/Ethylen-Copolymer, einem Gemisch aus Propylen/Ethylen-Copolymer und
Polypropylen und einem Gemisch aus Propylen/Ethylen-Copolymer und
Polypropylen/Ethylen-Propylen-Dien-Monomer und eine beliebige Kombination davon beinhaltet.

2. Material gemäß Anspruch 1, wobei das fluorierte Polymersystem warmgeschweißt werden kann und gegenüber Wasser abdichtend ist.

3. Material gemäß Anspruch 1, wobei die mit Fluor modifizierte Oberflächenschicht das Polymer beinhaltet, bei dem mindestens ein Teil der Wasserstoffatome von der Hauptkette des Polymers durch Fluoratome ausgetauscht wurde.

4. Material gemäß Anspruch 1, wobei die mit Fluor modifizierte Oberflächenschicht eine Dicke von bis zu etwa 2 µm aufweist.

5. Material gemäß Anspruch 1, wobei die mit Fluor modifizierte Oberflächenschicht ein Oberflächenenergieniveau von mindestens etwa 46 mN/m aufweist.

6. Material gemäß Anspruch 1, wobei das Polymer weiterhin mindestens eines von einem Stabilisator, einem Flammschutzmittel, einem Färbemittel, einem Füllstoff, einem funktionellen Zusatzstoff und eine beliebige Kombination davon beinhaltet.

7. Material gemäß Anspruch 1, wobei das Haftmittel oder die Überzugsschicht mindestens eines von Polyurethan, Acryl auf Wasserbasis, Styrol/Acryl, Epoxid, bituminösem Material, Heißschmelze und eine beliebige Mischung davon beinhaltet.

8. Material gemäß Anspruch 1, wobei das Bau- oder Konstruktionsmaterial eines von einem Bedachungsmaterial, einer mechanischen Verbindung, einer Tunnelauskleidung, einer Wasserreservoirauskleidung, einem Fensterdichtstoff, einem Fassadendichtstoff, einer Umfangsauskleidung, einem Feuchtraumband, einem bedruckbaren Banner oder einer Geländerverbindung ist.

9. Eine Bau- oder Konstruktionsstruktur, die das Bau- oder Konstruktionsmaterial gemäß Anspruch 1 und eine Materialschicht (A) beinhaltet, wobei die Materialschicht (A) an dem fluorierten Polymersystem haftet, und wobei die Materialschicht (A) eines von einer Wärmeisolationsschicht, einem Sperrholzsubstrat, einem Metall, einer Spule, einem Betonsubstrat und einer Gipsplatte ist.

10. Ein Verfahren zur Herstellung des Bau- oder Konstruktionsmaterials gemäß Anspruch 1, das die folgenden Schritte beinhaltet:
a) kontinuierliches Zuführen eines geformten Polymers mit einer Oberfläche in eine Kammer,
b) Aussetzen des geformten Polymers bei Raumtemperatur gegenüber einem Gemisch aus Fluor und Inertgas unter Atmosphärendruck,
c) Fluorieren der Oberfläche des geformten Polymers, um eine mit Fluor modifizierte Oberflächenschicht zu bilden, und
d) Auftragen eines Haftmittels oder einer Überzugsschicht auf die mit Fluor modifizierte Oberflächenschicht.

## Revendications

1. Un matériau de bâtiment ou de construction comprenant
un système de polymère fluoré qui comprend un polymère ayant une couche superficielle modifiée par fluor, et
un adhésif ou une couche de revêtement,
dans lequel l'adhésif ou la couche de revêtement est appliqué sur la couche superficielle modifiée par fluor, et dans lequel le polymère comprend une polyoléfine thermoplastique (TPO), la TPO comprend au moins un élément parmi un copolymère propylène/éthylène, un mélange homogène de copolymère propylène/éthylène et de polypropylène et un mélange homogène de copolymère propylène/éthylène et de monomère diène propylène polypropylène/éthylène et n'importe quelle combinaison de ceux-ci.

2. Le matériau selon la revendication 1, dans lequel le système de polymère fluoré peut être thermosoudé et est imperméabilisant.

3. Le matériau selon la revendication 1, dans lequel la couche superficielle modifiée par fluor comprend le polymère ayant au moins une partie des atomes d'hydrogène du squelette du polymère échangé avec des atomes de fluor.

4. Le matériau selon la revendication 1, dans lequel la couche superficielle modifiée par fluor a une épaisseur allant jusqu'à environ 2 µm.

5. Le matériau selon la revendication 1, dans lequel la couche superficielle modifiée par fluor a un niveau d'énergie superficielle d'au moins environ 46 mN/m.

6. Le matériau selon la revendication 1, dans lequel le polymère comprend en outre au moins un élément parmi un stabilisant, un ignifugeant, un colorant, une charge, un additif fonctionnel, et n'importe quelle combinaison de ceux-ci.

7. Le matériau selon la revendication 1, dans lequel l'adhésif ou la couche de revêtement comprend au moins un élément parmi un polyuréthane, un acrylique à base d'eau, un adhésif styrénique/acrylique, un époxy, un matériau bitumineux, un thermofusible, et un mélange quelconque de ceux-ci.

8. Le matériau selon la revendication 1, dans lequel le matériau de bâtiment ou de construction est un matériau parmi un matériau de couverture, un joint d'ingénierie, un revêtement intérieur de tunnel, un revêtement intérieur de réservoir d'eau, un produit d'étanchéité pour fenêtre, un produit d'étanchéité pour façade, un revêtement intérieur de périmètre, une bande pour salle d'eau, une bannière imprimable, ou une interconnexion de parapet.

9. Une structure de bâtiment ou de construction comprenant le matériau de bâtiment ou de construction de la revendication 1 et une couche de matériau (A), dans laquelle la couche de matériau (A) est collée sur le système de polymère fluoré, et dans laquelle la couche de matériau (A) est un élément parmi une couche d'isolation thermique, un substrat en contre-plaqué, un métal, une bobine, un substrat en ciment, et une feuille de gypse.

10. Un procédé de réalisation du matériau de bâtiment ou de construction de la revendication 1, comprenant les étapes consistant
a) à alimenter en continu une chambre en polymère conformé ayant une surface,
b) à exposer le polymère conformé à température ambiante à un mélange homogène de fluor et de gaz inerte sous une pression atmosphérique,
c) à fluorer la surface du polymère conformé pour former une couche superficielle modifiée par fluor, et
d) à appliquer un adhésif ou une couche de revêtement sur la couche superficielle modifiée par fluor.
